(19) Europäisches Patentamt
European Patent Office
Office européen des brevets

(11) Publication number: **0 034 891**
**A2**

# (12) EUROPEAN PATENT APPLICATION

(21) Application number: 81300551.9

(22) Date of filing: 11.02.81

(51) Int. Cl.³: H 01 B 7/00
H 02 G 3/04, H 01 B 13/00

(30) Priority: 21.02.80 GB 8005897

(43) Date of publication of application:
02.09.81 Bulletin 81/35

(84) Designated Contracting States:
BE DE FR IT LU NL

(71) Applicant: WARD & GOLDSTONE LIMITED
Frederick Road
Salford, M6 6AP(GB)

(72) Inventor: Slater, Peter
9 Treen Road
Tyldesley Manchester(GB)

(74) Representative: Massey, Alexander et al,
MARKS & CLERK Scottish Life House Bridge Street
Manchester, M3 3DP(GB)

## (54) Wiring harnesses.

(57) A wiring harness consists of a flexible extruded elongate plastics casing defining a number of side-by-side passages. The casing is open (preferably by slitting) along the length of the passages, each of which contains an insulated electrical conductor. Conductors can be egressed out of their passages at predetermined locations and are secured in such projected condition by, for example, adhesive tape applied to the casing upstream and downstream of said location.

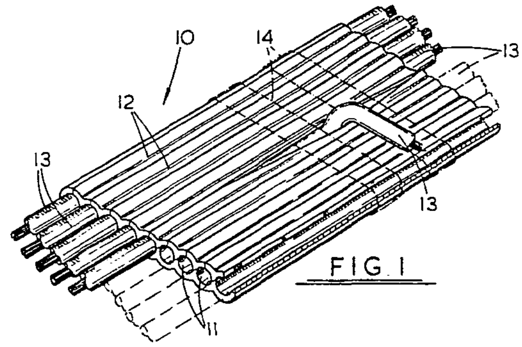

FIG. I

EP 0 034 891 A2

This invention relates to wiring harnesses especially but not exclusively for use in vehicles.

An object of the present invention is to provide a wiring harness of simple construction which is easy to instal and in which the mechanical strength and abrasion resistance of the electrical conductors is improved.

According to the invention there is provided a wiring harness especially but not exclusively for use in vehicles, the wiring harness comprising an elongate casing of insulating material defining a plurality of side-by-side passages with at least some open lengthwise, electrical conductors housed in at least some of said passages with at least one such conductor projecting out of its passage intermediate the ends of the elongate casing, and means for securing said conductor in said projecting position.

Embodiments of the present invention will now be described, by way of example, with reference to the accompanying drawings, in which:-

Fig. 1 is a fragmentary perspective view of a wiring harness according to the invention;

Fig. 2 is a general perspective view of the wiring harness of Fig. 1;

Fig. 3 is a fragmentary perspective view of the wiring harness of Fig. 2 showing a multiple conductor projection;

Fig. 4 is an end elevation of a modified form of wiring harness;

Fig. 5 is a perspective view of another modified form of wiring harness;

Figs. 6 to 9 are perspective views of different conductor insertion tools; and

Fig. 10 is a perspective view of a multiple conductor insertion tool.

Referring to Figs. 1 to 3, the wiring harness comprises a flexible protective casing 10 formed by extrusion and defining a number of interconnected side-by-side passages 11 of generally tubular form slit lengthwise as indicated at 12. The slitting is preferably effected immediately after the extrusion operation but may be later depending upon which is most convenient. The tubular passages 11 may all be of the same diameter or there may be different diametral sizes. It is envisaged that one or more tubular passages may not be slit especially if it is intended not to contain an electrical conductor within such passage.

Generally, however, each tubular passage 11 contains an insulated electrical conductor 13.

It is envisaged that one or more of the electrical conductors 13 may be bare wire, the necessary insulation being provided by the casing 10.

The wiring harness has lateral branches constituted by individual conductors 13 (see Fig. 2) or a group of conductors 13 (see Fig. 3). These branches are provided by extracting the conductor or conductors 13 out of the tubular passages 11 at the appropriate location and securing the conductor of conductors 13 in projected

position by suitable means, usually strips 14 of adhesive tape applied to the casing 10 upstream and downstream of the conductor or conductors 13. It will be manifest that the projected conductor or conductors may be secured in exposed position by suitable clips or by binding wrapped around the casing 10.

Where there is multiple conductor projection (see Fig. 3) it is preferred that the conductors 13 be contained in a casing 15 of the same construction as the casing 10.

Appropriate connectors such, for example, as 16 are fitted to the ends of the conductors 13.

It will be manifest that not every tubular passage 11 need contain a conductor 13.

It should be noted that the wiring harness can be stepped for example as shown in Fig. 2 so that it is of varying length across its width. The stepping need not be regular as shown. For example, it may be stepped inwardly of its lateral edges.

Also the harness may if necessary be split longitudinally for part of its length.

The conductors 13 are rolled into their respective tubular passages 11 by a convenient tool which ploughs open the slit 12 and rolls the conductor 13 lengthwise into the passage 11 which then closes around the conductor 13.

Examples of such conductor insertion tools are illustrated in Figs. 6 to 10.

In Fig. 6, the tool 17 is formed from a strip of relatively rigid plastics material of channel cross-section configured at its bottom to define a toe 18 and having a cut-out 19 in the heel of the tool 17.

A conductor 13 lies within the channel and egresses through the cut-out 19. The toe 18 of the tool 17 is inserted into a tubular passage 11 and the tool 17 pulled along same opening the slit 12 and laying the conductor 13 in the passage 11.

In Fig. 7, the tool 20 has a handle 21 having at one end a laying head 22 which includes a guide pin 23 secured to a chamfered or inclined edge 24. The head 22 has a guide slot 25 of the conductor 13 and its bottom is recessed as indicated at 26. The pin 23 is inserted into a tubular passage 11 and by pulling the tool 20 along the latter the laying head 22 opens the slit 12 and lays the conductor 13 guided by slot 25 and recess 26 in the passage.

The tool 27 of Fig. 8 has a pulling handle 28 with a leading slit-opening toe 29 and to its rear a passage 30 open _via_ a slot 31 through which a conductor 13 is inserted into the passage 30. The operation of this tool 27 is the same as tools 17 and 20.

Fig. 9 shows a tool 32 for laying larger diameter conductors than those laid with tools 17, 20 and 27, and comprises a tubular handle 33 open along its length

by slot 34 and tapering at its operative end as indicated at 35. A plastics pipe 37 split at 38 to give its flexibility is fitted in the tapered bottom end 35 of the handle 33. The pipe 37 serves to open the slit 12 as the tool 32 is pulled along a passage 11.

Finally, Fig. 10 shows a tool 39 for multiple conductor insertion which has a top plate 40 hinged to a flat base 41 and 42. The top plate 40 has slit opening teeth 43 and holes 44 for passage of conductors 13. In use, the casing 10 is inserted between the base 41 and top plate 40 with a tooth 43 in each slit 12 and a conductor 13 through each hole 44. Relative movement between the casing 10 and the tool 39 causes opening of the slits and laying of the conductors 13 into the passages 11.

When being fitted into a vehicle the wiring harness is subject to bending and twisting to allow it to be disposed correctly in the vehicle and the protective casing 10 serves to give mechanical strength and abrasion resistance to the conductors 13. During bending or twisting the conductors 13 do not egress from their tubular passages 13, there being a rolling action of the passage walls around the conductors 13 in the manner of bearings.

Fig. 4 shows a plastics casing 45 having two rows 46,47 of tubular passages 48, each slit as indicated at 49. A conductor is indicated at 50. As can be seen the slits 49 are on opposed faces of the casing 45.

Referring finally to Fig. 5, the protective casing 51 is constituted by a body 52 of indefinite length which can be cut to size and which is formed of plastics material, preferably a relatively rigid plastics material.

The body 52 is configured to provide a series of side-by-side recesses 53 for accommodating electrical conductors (not shown), adjacent recesses 12 being separated by a wall 54. The two lateral edges 55 are configured to provide one half of a snap fitting.

Conductors 56 are press fitted into the recesses 53 and are retained in place by the curvature of the recess wall.

Conductors 56 projected out of their recesses 53 are secured in extracted position by flexible plastics straps 57 having at each end a wing 58 configured to snap engage a lateral wall 55 of the casing 51.

It will be manifest that the conductors 56 lie well within the recesses 53 and are therefore given mechanical strength and are protected against abrasion.

A passage 11, 48 or recess 53 may contain more than one conductor.

The straps 57 may be replaced by adhesive tape, binding material or clips.

In the Fig. 5 embodiment, projecting multiple conductors may be housed in a casing such as casing 51 or casing 10.

CLAIMS:

1. A wiring harness especially but not exclusively for use in vehicles, the wiring harness comprising an elongate casing of insulating material defining a plurality of side-by-side passages with at least some open lengthwise, electrical conductors housed in at least some of said passages with at least one such conductor projecting out of its passage intermediate the ends of the elongate casing, and means for securing said conductor in said projecting position.

2. A wiring harness as claimed in claim 1, in which the casing is extruded from a plastics material and is slit along the length of each passage.

3. A wiring harness as claimed in claim 1, in which the casing comprises an elongate body defining a plurality of spaced side-by-side recesses, each accommodating at least one insulated electrical conductor and with the or each projecting conductor secured in position by snap-on straps.

4. A wiring harness as claimed in any one of claims 1 to 3, in which each passage houses an insulated conductor, each of which either extends the full length of its passage or projects out of its passage at a predetermined location where it is secured.

5. A wiring harness as claimed in any one of claims 1, 2 or claim 4 when dependent on claim 1 or 2, in which the or each projecting conductor is secured in position by adhesive tape applied to the casing at each side of the projecting conductor.

6. A wiring harness as claimed in any one of claims 1 to 5, which is stepped across its width so that it is of varying lengths.

7. A wiring harness as claimed in any one of claims 1 to 6 in which the casing defines a plurality of parallel transverse rows of passages.

8. A wiring harness as claimed in any one of claims 1 to 7 comprising a plurality of conductors projecting out of the casing at one location and contained within a casing defining passages for the conductors, which passages are slit lengthwise.

9. A wiring harness especially but not exclusively for vehicles, substantially as hereinbefore described with reference to the accompanying drawings.

10. A tool for inserting an electrical conductor into a passage in an elongate casing of insulating material which is slit along the length of the passage, the tool comprising an element movable along the passage to open the slit and the tool defining a guide passage through which the conductor can move into the passage at the open region of the slit.

11. A tool as claimed in claim 10 comprises a handle having at one end a toe or plough-like configuration serving as the slit-opening element.

12. A tool as claimed in claim 10 comprising a tubular and axially slotted handle with at one end a split plastics pipe which serves as the slit-opening element.

13. A tool as claimed in claim 10 comprising a plurality of spaced slit-opening teeth with a conductor-receiving opening for each tooth.

14. A tool, substantially as hereinbefore described with reference to Fig. 6 or Fig. 7 or Fig. 8 or Fig. 9 or Fig. 10 of the accompanying drawings.

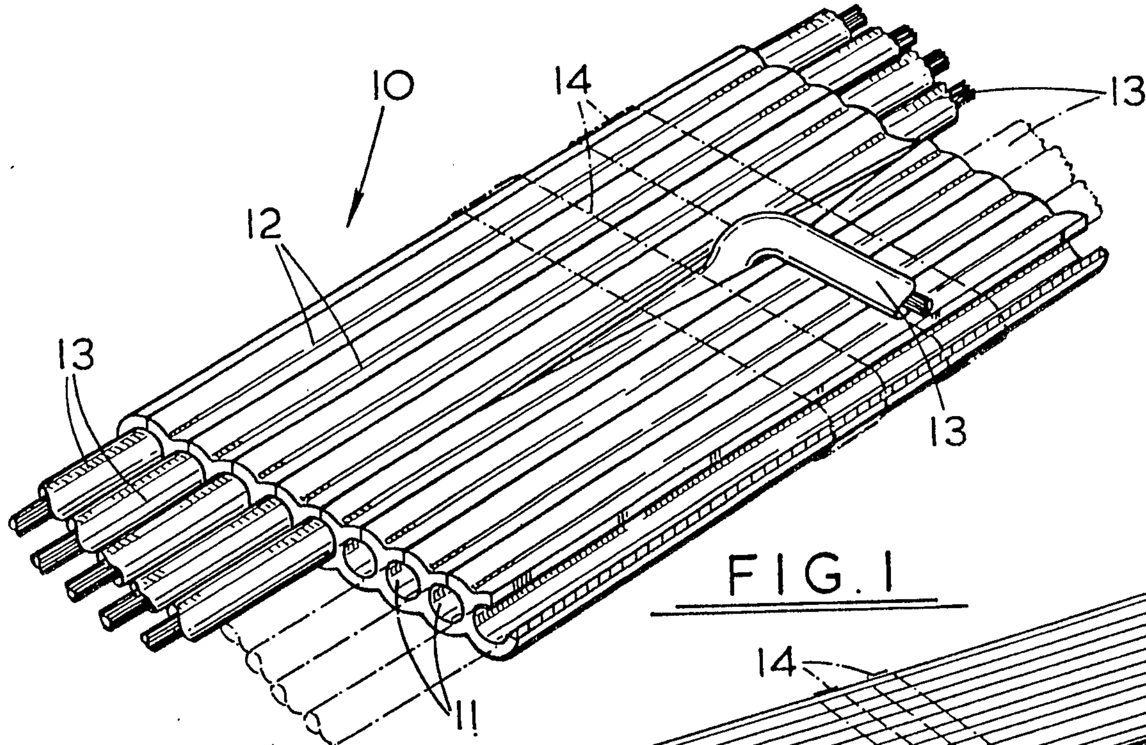


FIG. 1

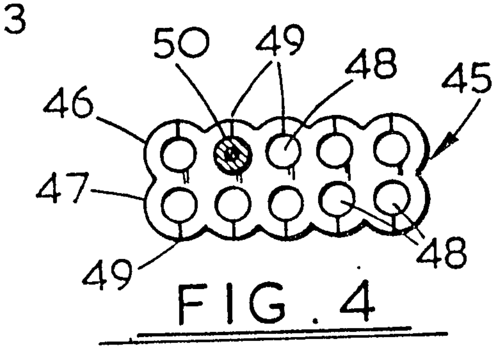


FIG. 4

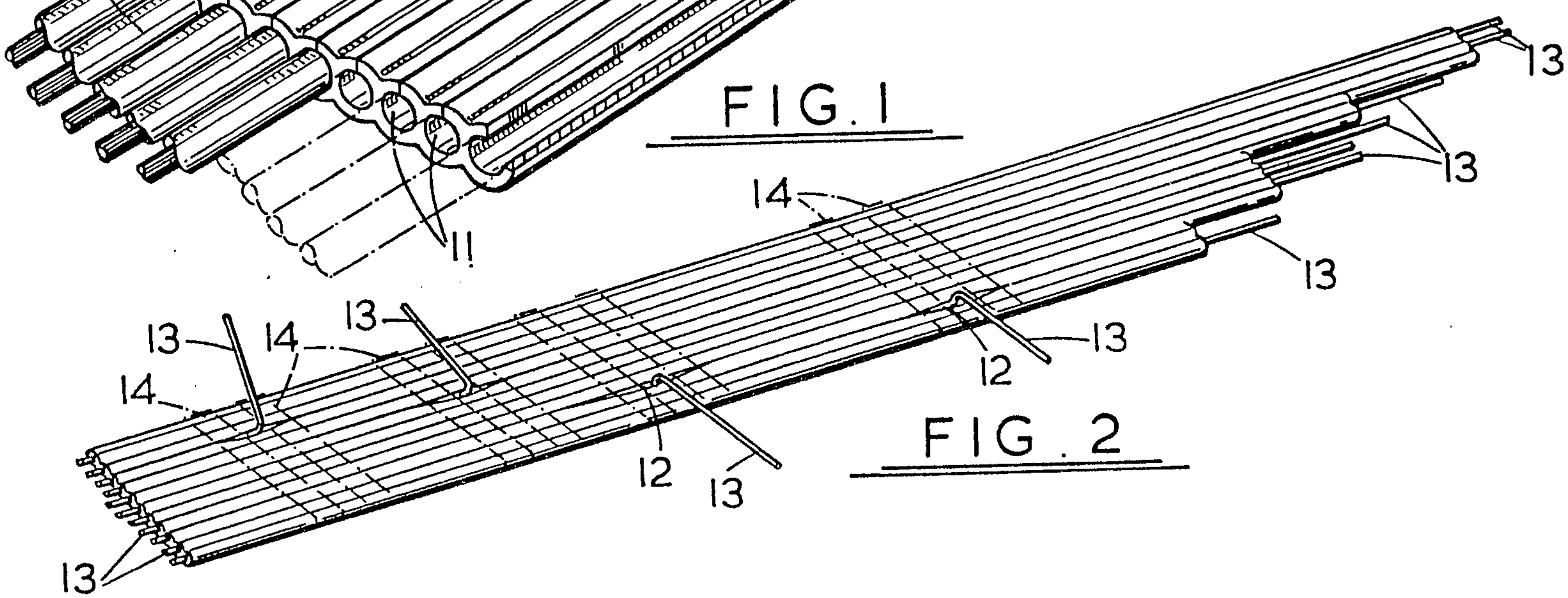


FIG. 2

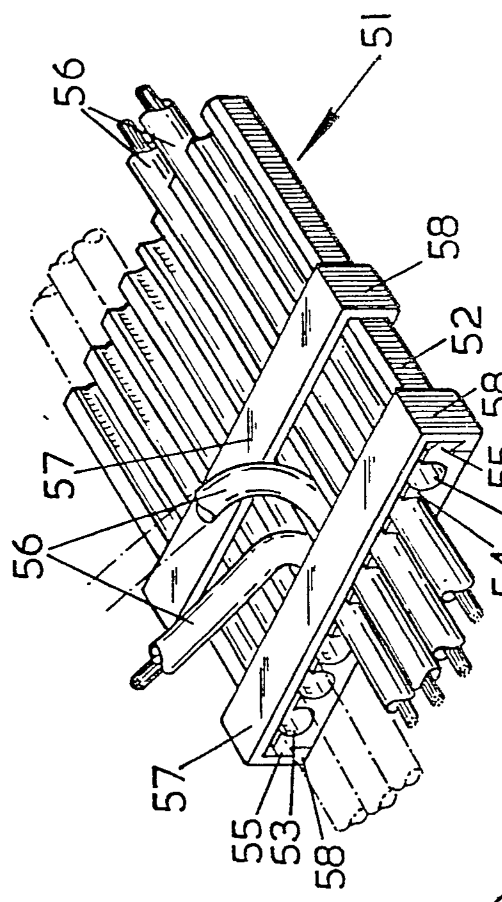


FIG. 5

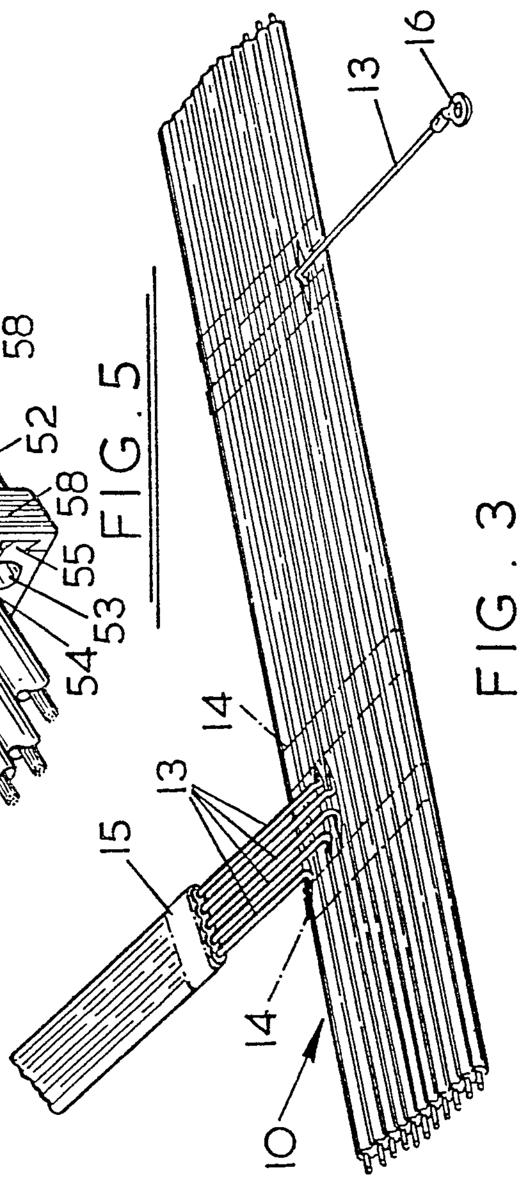


FIG. 3

0034891

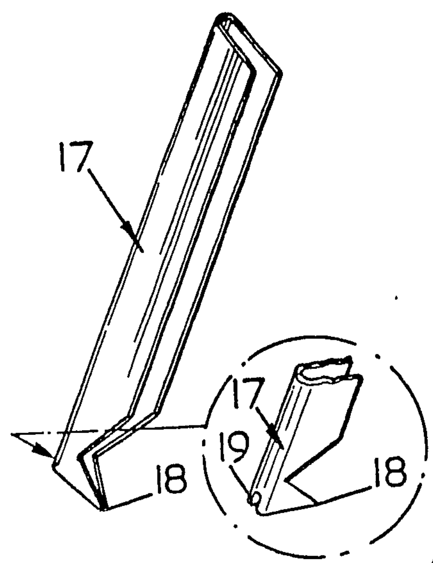


FIG 6

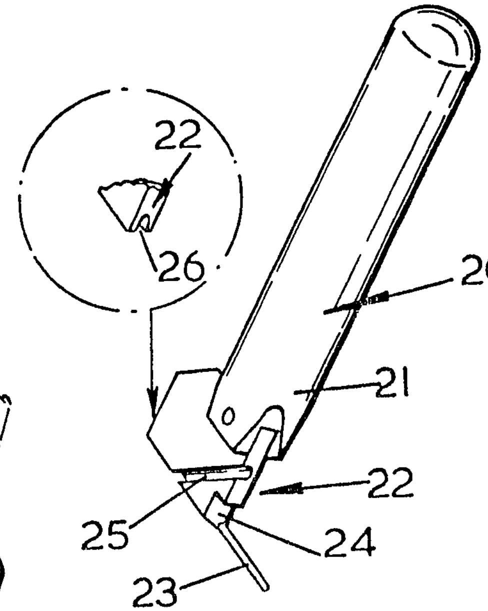


FIG. 7

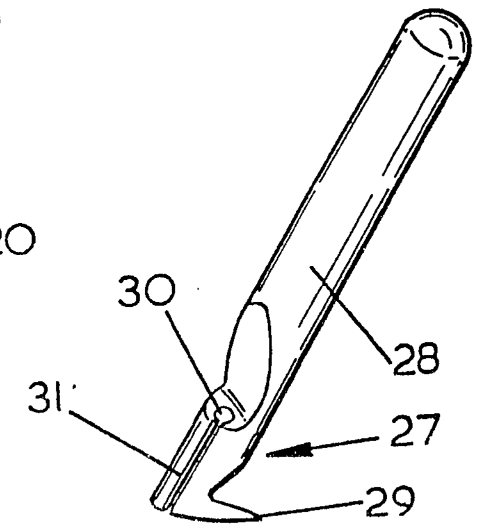


FIG. 8

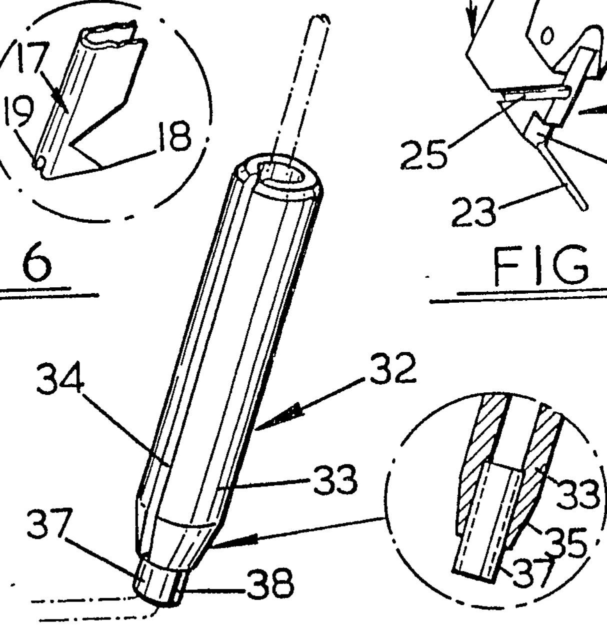


FIG. 9

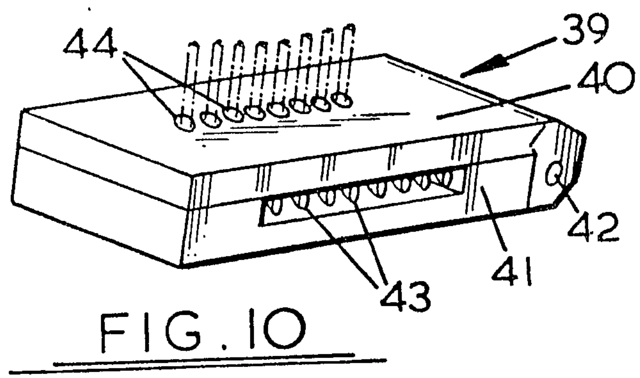


FIG. 10